# EUROPÄISCHE PATENTANMELDUNG

(11) **EP 1 061 666 A1**
(43) Veröffentlichungstag der Anmeldung: **20.12.2000**
(21) Anmeldenummer: 00440146.9
(22) Anmeldetag: 19.05.2000
(51) Int. Cl.: H04B 7/005

(54) **Verfahren zur Beeinflussung der Übertragung von Informationssignalen in einem interaktiven Kommunikationsnetwerk**

(30) Priorität: 15.06.1999 DE 19927203
(71) Anmelder: ALCATEL, 75008 Paris (FR)
(72) Erfinder: Grammel, Gert, 73066 Uhingen (DE)
(74) Vertreter: Menzietti, Domenico, Dipl.-Ing

(57) **Zusammenfassung**

Eine Aufgabe der Erfindung ist, ein Verfahren zu schaffen, bei dem die Beeinflussung der Übertragung von Informationssignalen in einem interaktiven Netzwerk mit dem Ziel der Unterdrückung von Störungen aber mit der Maßgabe das Netzwerk einer möglichst großen Anzahl von Teilnehmern stets zur Verfügung zu stellen optimiert wird. In dem erfindungsgemäßen Kommunikationsnetz überwacht diejenige Einrichtung, die Signale von einer benachbarten Einrichtung erhält, ob die empfangenen Signale eine obere Schwelle nicht überschreiten und eine untere Schwelle nicht unterschreiten. Wird festgestellt, daß die empfangenen Signale außerhalb des vorgegebenen Bereichs liegen, so wird die benachbarte Einrichtung darüber informiert. Die benachbarte Einrichtung regelt daraufhin die Ausgangsleistung der ausgesandten Signale derart nach, daß sie empfangsmäßig wieder im vorgegebenen Bereich liegt. Die Information, die der benachbarten Einrichtung übermittelt wird, kann lediglich die ermittelte Signalleistung beinhalten, so daß vor der Regelung noch eine Auswertung in der benachbarten Einrichtung erfolgt. Die Information kann aber auch bereits das ausgewertete Ergebnis und ggf. ein Stellsignal für einen zu regelnden Verstärker in der benachbarten Einrichtung enthalten. Es ist somit ein selbstregelnder Mechanismus geschaffen, der Störungen aller Art, z.B. hervorgerufen durch Temperaturschwankungen etc. während des Betriebes ermitteln und beseitigen kann.

## Beschreibung

Die Erfindung bezieht sich auf eine Sende-/Empfangseinrichtung nach dem Oberbegriff des Patentanspruchs 1 bzw. 2 sowie auf ein Verfahren nach dem Oberbegriff des Patentanspruchs 3.

Interaktive Kommunikationsnetze sind beispielsweise als sog. HFC-Netze oder HFR-Netze ausgeführt; HFC=Hybrid Fibre Coax, HFR=Hybrid Fibre Radio. Für den Vowärtskanal wird ein Punkt-zu-Mehrpunkt Netzwerk von der Zentrale zu den Endstellen verwendet, das einen optischer Zubringer plus ein daran anschließendes Koaxialkabelnetz bzw. Funknetz beinhaltet. Für den Rückkanal wird zunehmend ein Mehrpunkt-zu-Punkt Netzwerk, z.B. ein CDMA Netzwerk verwendet, das optisch, elektrisch oder als Funknetz sowie in Mischformen ausgebildet werden kann; CDMA=Code Division Multiple Access.

In EP 0 844 791 A2 ist ein aktiver Übergabepunkt eines interaktiven Kommunikationsnetzes beschrieben. Der Übergabepunkt verfügt über eine Meßeinheit zur Ermittlung der Amplitude oder der Intensität eines über den Rückkanal zu übertragendes Signal. Vor der Aussendung des Signals wird das Ergebnis der Meßeinheit in einer Steuereinheit ausgewertet und daraufhin ein Schalter derart betätigt, daß er das auszusendende Signal weiterleitet oder seine Weiterleitung verhindert. Im Übergabepunkt erfolgt eine dezentrale und autarke Überwachung einzelner Rückkanalfrequenzbereiche. Dadurch wird die Störmöglichkeit des gesamten Netzwerks durch einzelne Endstellen insbesondere durch die schnelle Reaktionszeit effektiv verhindert. Störungen, die auf anderem Weg ins Netzwerk eingespeist werden können allerdings weder erfaßt noch unterdrückt werden.

In EP 0 854 597 A2 ist ein System zur optischen Übertragung von Informationen über mehrere optische Übertragungsleitungen beschrieben. Das System beinhaltet optische Netzabschlußeinrichtungen, die jeweils eine Steuereinheit zur Detektion der Signalpegel in aufgeteilten Rückkanalfrequenzbereichen beinhalten. Liegt der Signalpegel außerhalb eines Bereichs, der durch Schwellen eingegrenzt wird, wird ein Schalter betätigt, der das über den Rückkanal zu übertragende Signal weiterleitet oder dessen Weiterleitung verhindert. Damit werden auch Störungen auf dem Netzwerk erfaßt und unterdrückt. Beiden Lösungen ist jedoch gemein, daß nicht die Ursachen bekämpft werden, sondern, daß durch eine Abschaltung, die zu einer Nichtbenutzbarkeit des Netzwerkes und damit zu Gebührenausfällen des Netzbetreibers sowie zu Unmut der Teilnehmer führt, die Störung lediglich zeitweise unterdrückt und damit weiteren Schädigungen des Netzwerkes, z.B. Kurzschluß etc. vorgegriffen wird.

Eine Aufgabe der Erfindung ist daher ein Verfahren zu schaffen, bei dem die Beeinflussung der Übertragung von Informationssignalen in einem interaktiven Netzwerk mit dem Ziel der Unterdrückung von Störungen aber mit der Maßgabe das Netzwerk einer möglichst großen Anzahl von Teilnehmern stets zur Verfügung zu stellen optimiert wird.

Gelöst wird diese Aufgabe durch eine Sende-/Empfangseinrichtung gemäß Patentanspruch 1, eine Sende-/Empfangseinrichtung gemäß Patentanspruch 2 sowie ein Verfahren gemäß Patentanspruch 3.

In dem erfindungsgemäßen Kommunikationsnetz überwacht diejenige Einrichtung, die Signale von einer benachbarten Einrichtung erhält, ob die empfangenen Signale eine obere Schwelle nicht überschreiten und eine untere Schwelle nicht unterschreiten. Durch diese Überwachung wird zunächst sichergestellt, daß die empfangenen Signale stets in einem vorgegebenen Bereich liegen, der für einen optimalen Empfang vorgesehen ist. Wird allerdings festgestellt, daß die empfangenen Signale außerhalb des vorgegebenen Bereichs liegen, so wird die benachbarte Einrichtung darüber informiert. Die benachbarte Einrichtung regelt daraufhin die Ausgangsleistung der ausgesandten Signale derart nach, daß sie empfangsmäßig wieder im vorgegebenen Bereich liegt. Die Information, die der benachbarten Einrichtung übermittelt wird, kann lediglich die ermittelte Signalleistung beinhalten, so daß vor der Regelung noch eine Auswertung in der benachbarten Einrichtung erfolgt. Die Information kann aber auch bereits das ausgewertete Ergebnis und ggf. ein Stellsignal für einen zu regelnden Verstärker in der benachbarten Einrichtung enthalten. Die Auswertung kann beispielsweise in der Einrichtung, die die Signale empfängt oder in der Zentrale erfolgen. Die Einrichtungen können jeweils Teil eines bidirektionalen Verstärkers sein. Vorteilhaft wirkt sich aus, daß das Kommunikationsnetz trotz vermeintlicher Über- oder Untersteuerung einzelner Einrichtungen durch Nachregelung noch funktionsfähig bleibt. Es ist somit ein selbstregelnder Mechanismus geschaffen, der Störungen aller Art, z.B. hervorgerufen durch Temperaturschwankungen etc. während des Betriebes ermitteln und beseitigen kann. Der selbstregelnde Mechanismus ist sowohl für den Rückkanal wie den Vorwärtskanal anwendbar, wodurch die komplette Übertragung im Netzwerk überwacht und gesteuert werden kann. Es ist keine zeitaufwendige und ungenaue manuelle Einstellung notwendig. Ebensowenig die Überwachung mittels eines sog. Network Management. Ein weiterer Vorteil liegt darin, daß mit minimaler Verzögerung auf Störungen reagiert werden kann, da auf kürzestem Weg durch die benachbarte Einrichtung die Störung sofort detektiert wird und geeignete Maßnahmen zur Behebung der Störung eingeleitet werden.

Vorteilhafte Ausgestaltungen sind den abhängigen Patentansprüchen zu entnehmen.

Im folgenden wird ein Ausführungsbeispiel unter Zuhilfenahme von zwei Figuren erläutert. Es zeigen:
- Fig. 1: eine schematische Darstellung eines interaktiven Kommunikationsnetzwerkes,
- Fig. 2: eine schematische Darstellung einer erfindungsgemäßen Sende/Empfangseinrichtung für das Netzwerk aus Fig. 1 und
- Fig. 3: eine schematische Darstellung einer weiteren erfindungsgemäßen Sende-/Empfangseinrichtung für das Netzwerk aus Fig. 1.

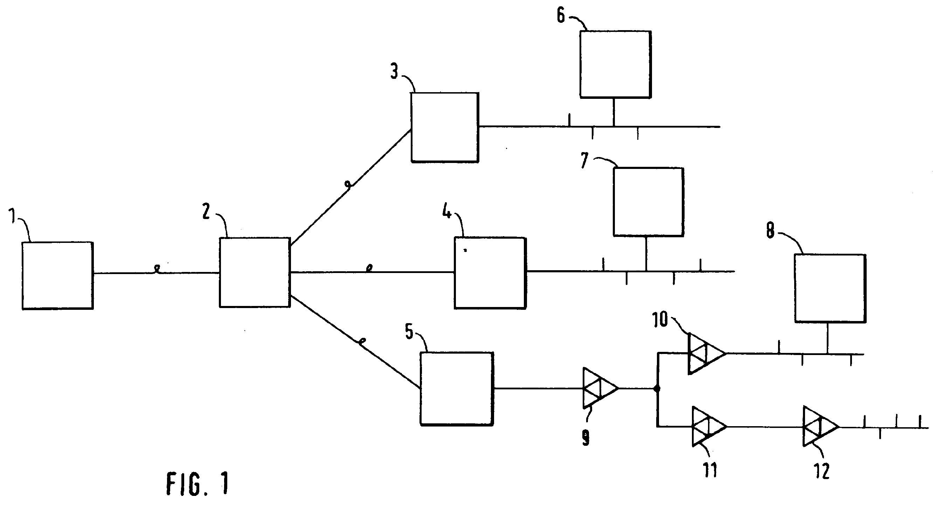

Das Ausführungsbeispiel wird nun zunächst unter Zuhilfenahme von Fig. 1 erläutert. Fig. 1 zeigt ein interaktives Kommunikationsnetzwerk. Das Netzwerk dient der Übertragung von Informationen wie Fernsehsiganle, Videosignale, Internetsignale, Steuersignale, etc. von einer Zentrale 1 über einen Vorwärtskanal zu mehreren Endstellen, z.B. eintausend, von denen drei 6, 7, 8 beispielhaft dargestellt sind. Ferner werden Informationen wie Abrufsignale für Service-on-demand Anwendungen, insb. Video-on-demand, Zugangssignale zum Internet, Synchronisationssignale etc. von den Endstellen 6, 7, 8 über einen Rückkanal zur Zentrale 1 übertragen. Das Netzwerk ist als Punkt-zu-Mehrpunkt Netzwerk ausgeführt. Die Zentrale 1 ist über optische Glasfaserleitungen und einen optischen Splitter 2 mit drei optischen Netzabschlußeinheiten 3, 4, 5, sog. ONU verbunden. Die ONUs ihrerseits führen eine optisch/elektrische Umsetzung für den Vorwärtskanal und eine elektrisch/optische Umsetzung für den Rückkanal durch und sind jeweils über ein Koaxialkabelnetz und ggf. elektrischen, bidirektionalen Verstärkern 9, 10, 11, 12 mit den Endstellen 6, 7, 8 verbunden. Vorwärts- und Rückkanal werden dabei auf den optischen Glasfaserleitungen beispielsweise auf zwei unterschiedlichen Wellenlängen bereitgestellt. Anstelle eines gemeinsamen Netzwerkes für den Vorwärts- und den Rückkanal können auch zwei separate Netzwerke, z.B. als Punkt-zu-Mehrpunkt Netzwerke ausgeführt verwendet werden. Auf den optischen Glasfaserleitungen können zusätzlich optische Verstärker eingefügt werden, um die Reichweite zu erhöhen.

Die Zentrale 1 wird üblicherweise als Head End bezeichnet und beinhaltet u.a. eine Steuereinheit, die die Verarbeitung der empfangenen Signale übernimmt. Die Steuereinheit ist beispielsweise als Prozessor plus Speicher, Register, etc. ausgeführt. Die Steuereinheit hat eine Schnittstelle zu einer Sende-/Empfangseinrichtung, die Informationssignale im Vorwärtskanal überträgt sowie ggf. weitere Schnittstellen, z.B. zu einer Fernsehanstalt für einen Zugang zu Fernsehsignalen, zu einem Internet-Serviceprovider für einen Zugang zum Internet, zu einem Video-Server für einen Zugang zu Videofilmen.

Die Übertragung im Vorwärtskanal erfolgt z.B. mit TDM oder FDM; TDM=Time Division Multiplex, FDM=Frequency Division Multiplex. Die Übertragung im Rückkanal beipielsweise mit TDMA, FDMA oder CDMA, TDMA=Time Division Multiple Access, FDMA=Frequency Division Multiple Access, CDMA=Code Division Multiple Access. Die Endstellen 6, 7, 8 sind üblicherweise über einen Übergabepunkt an das Netzwerk angeschlossen. Jede Endstelle 6, 7, 8 kann einen Decoder, ein Modem, ein ADSL-Modem, eine Set-Top Box oder dgl. für den Zugang zum Vorwärts- und Rückkanal beinhalten.

Die Erfindung ist grundsätzlich auf verschiedene Netzwerke mit unterschiedlichen Topologien anwendbar, darunter außer dem sog. HFC Netzwerk des Ausführungsbeispiel, HFC=Hybrid Fibre Coax, beispielsweise ein HFR Netzwerk, HFR=Hybrid Fibre Radio, optische SDH Netzwerke, SDH=Synchrone Digitale Hierarchie, optische Ringtopologien, Übertragungsnetze, Funknetze, etc.

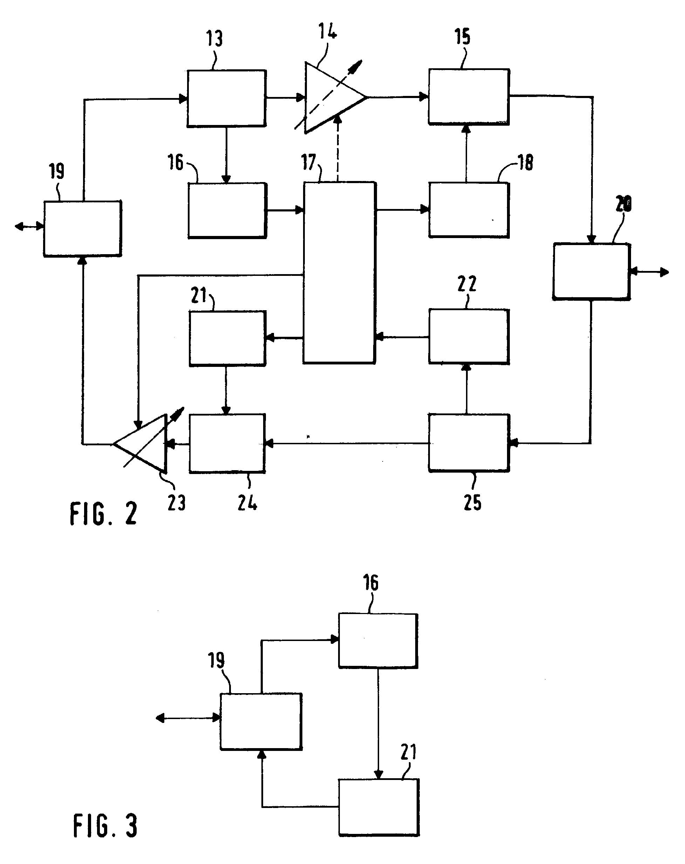

Das Ausführungsbeispiel wird nun weiter anhand von Fig. 2 erläutert. Fig. 2 zeigt eine erfindungsgemäßen Sende-/Empfangseinrichtung für das Netzwerk aus Fig. 1.

Die Sende-/Empfangseinrichtung des interaktiven Kommunikationsnetzwerkes, das die Zentrale 1 beinhaltet, die über den Vorwärtskanal mit mehreren Endstellen 6, 7, 8 verbunden ist, wobei die mehreren Endstellen 6, 7, 8 über den Rückkanal mit der Zentrale 1 verbunden sind, ist Teil eines bidirektionalen Verstärkers 9, 10, 11, 12, Teil der Zentrale 1 oder Teil einer der optischen Netzabschlußeinheit 3, 4, 5. Die Sende/Empfangseinrichtung kann auch Teil eines Übergabepunktes, eines Endgerätes, eines Modems oder dgl. sein.

Die Sende-/Empfangseinrichtung beinhaltet eine Verstärkereinheit 23, die eine einstellbare Verstärkung hat und geeignet ist, Informationssignale zu verstärken, die über den Rückkanal des interaktiven Netzwerkes ausgesandt werden sollen sowie eine Empfangseinheit 16, um Signale einer weiteren Sende-/Empfangseinrichtung über den Vorwärtskanal des interaktiven Netzwerkes zu empfangen. Anstelle der Dämpfungsglied vorgesehen ist, das eine einstellbare Dämpfung hat und geeignet ist, Informationssignale zu dämpfen, die über das interaktive Netzwerk ausgesandt werden sollen. Anstelle der Verstärkereinheit 23 kann ein Dämpfungsglied vorgesehen sein, das eine einstellbare Dämpfung hat und geeignet ist, Informationssignale zu dämpfen, die über das interaktive Netzwerk ausgesandt werden sollen. Des weiteren ist eine Steuereinheit 17 vorgesehen, die mit der Empfangseinheit 16 und der Verstärkereinheit 23 verbunden ist und geeignet ist, die Verstärkung der Verstärkereinheit 23 in Abhängigkeit von den über den Vorwärtskanal empfangenen Signalen einzustellen.

Die Sende-/Empfangseinrichtung ist beispielsweise Teil des bidirektionalen Verstärkers 11 aus Fig. 1. Sie dient dazu, zum einen über den Rückkanal vom bidirektionalen Verstärker 12 empfangene Informationssignale über den Rückkanal an den bidirektionalen Verstärker 9 verstärkt weiterzuleiten. Zum anderen dient sie dazu, über den Vorwärtskanal vom bidirektionalen Verstärker 9 empfangene Informationssignale über den Vorwärtskanal an den bidirektionalen Verstärker 12 verstärkt weiterzuleiten.

Verstärker 11 stellt mittels seiner Verstärkereinheit 23 mit variabler Verstärkung die Ausgangsleistung der über den Rückanal zu übertragenden Informationssignale auf einen vorgegeben Wert ein und überträgt sie zu Verstärker 9. Dieser empfängt die Informationssignale aufgrund einer auf der Leitung bestehenden Dämpfung plus äußeren Störeinflüssen herrührend von z.B. Einstreuungen ins Netzwerk oder Temperaturschwankungen mit einer im Vergleich zur ausgesendeten Leistung am Verstärker 11 geringeren Leistung. Entscheidend ist nun, ob die Leistung der empfangenen Informationssignale noch über einer vorgegebenen Schwelle liegen damit ihre Detektion noch möglich ist. Verstärker 9 mißt dazu zunächst die Leistung mittels einer Meßeinheit, z.B. ein Schwellwertdetektor und stellt fest, ob sie über der vorgegebenen Schwelle liegt. Ist dies nicht der Fall, so wird Verstärker 11 ein Informationssignal übersandt, das dieser mittels der Empfangseinheit 16 empfängt und an die Steuereinheit 17 weiterleitet. Die Steuereinheit 17 steuert den Verstärkereinheit 23 derart an, daß nun eine höhere Ausgangsleistung für die über den Rückkanal zu übertragenden Informationssignale generiert wird. Verstärker 9 muß dazu Verstärker 11 adressieren, da die im Vorwärtskanal übertragenen Signale auch Verstärker 10 erreichen. Je mehr Verstärker in einem Punkt-zu-Mehrpunkt Subnetz an einen einzelnen Verstärker angeschlossen sind, desto schwieriger wird die Detektion einzelner Informationssignale einzelner Verstärker. Ferner kann eine durch einen einzelnen Verstärker hervorgerufene Störung, z.B. ein Störsignal mit eine Dauereins, die Übertragung aller anderen Verstärker derart beeinflussen, daß kein einziges Signal mehr detektierbar ist und damit ein gesamten Subnetz oder im schlimmsten Fall das gesamte Netzwerk nicht mehr funktionsfähig ist. Verstärker 9 mißt dazu die Leistung mittels einer Meßeinheit, z.B. einem Schwellwertdetektor und stellt fest, ob sie über einer vorgegebenen unteren Schwelle und unter einer vorgegeben oberen Schwelle liegt.

Unabhängig von der Überwachung des Rückkanals ist eine Überwachung des Vorwärtskanal möglich. Die Sende-/Empfangseinrichtung des interaktiven Kommunikationsnetzwerkes, das die Zentrale 1 beinhaltet, die über den Vorwärtskanal mit mehreren Endstellen 6, 7, 8 verbunden ist, wobei die mehreren Endstellen 6, 7, 8 über den Rückkanal mit der Zentrale 1 verbunden sind, beinhaltet dazu eine Verstärkereinheit 14, die eine einstellbare Verstärkung hat und geeignet ist, Informationssignale zu verstärken, die über den Vorwärtskanal des interaktiven Netzwerkes ausgesandt werden sollen. Ferner ist eine Empfangseinheit 22 vorgesehen, um Signale einer weiteren Sende-/Empfangseinrichtung über den Rückkanal des interaktiven Netzwerkes zu empfangen, und eine Steuereinheit 17, die mit der Empfangseinheit 22 und der Verstärkereinheit 14 verbunden ist und geeignet ist, die Verstärkung der Verstärkereinheit 14 in Abhängigkeit von den über den Rückkanal empfangenen Signalen einzustellen. Das im Rückkanal angewendete Prinzip wird somit auf den Vorwärtskanal übertragen.

Die Sende-/Empfangseinrichtung des Ausführungsbeispiels beinhaltet zwei Filter 19, 20, die jeweils als Hochpaß/Tiefpaßfilter ausgebildet sind. Sie dienen dazu, den Vorwärtskanal vom Rückkanal zu trennen. Im Vorwärtskanal werden Signale beispielsweise im Frequenzbereich von 60 MHz bis 800 MHz übertragen. Im Rückkanal werden Signale beispielsweise im Frequenzbereich von 10 MHz bis 50 MHz übertragen. Mittels eines Hochpaßfilters mit einer Grenzfrequenz von 55 MHz können somit alle Signale im Vorwärtskanal herausgefiltert werden. Mittels eines Tiefpaßfilters mit einer Grenzfrequenz von 55 MHz können somit alle Signale im Rückkanal herausgefiltert werden.

Die Sende-/Empfangseinrichtung beinhaltet des weiteren zwei Filter 13, 15, die jeweils als Hochpaß/Tiefpaßfilter ausgebildet sind. Die Filter dienen dazu, den Vorwärtskanal in zwei Teilkanäle zu unterteilen. In dem einen Teilkanal werden Informationen übertragen, die lediglich weitergeleitet werden sollen, z.B. Fernsehsignale, Videosignale, etc. In dem anderen Teilkanal werden Signale übertragen, die in der Sende/Empfangseinrichtung einer Verarbeitung, Überprüfung oder dgl. bedürfen. Zu diesen Signalen gehören auch die Signale einer benachbarten Signal/Empfangseinrichtung, z.B. Verstärker 9. Diese Signale beinhalten Informationen über die empfangene Leistung der von der Sende/Empfangseinrichtung, z.B. Verstärker 11, ausgesendten Signale. Die Signale von Verstärker 9 werden der Empfangseinheit 16 zugeführt, die sie zur Steuereinheit 17 weiterleitet. Die Empfangseinheit 16 beinhaltet z.B. eine als Schwellwertdetektor ausgebildete Meßeinheit und übernimmt beispielsweise die Dekodierung, Entzerrung, Dekomprimierung, etc. Die Steuereinheit 17 ist beispielsweise als Prozessor, Digitaler Signalprozessor oder Mikroprozessor, plus Speicher, Register, etc. ausgeführt. Zwischen die Filter 13 und 15 ist eine Verstärkereinheit 14, optional mit einstellbarer Verstärkung eingefügt, die von der Steuereinheit 17 gesteuert wird. Die Verstärkereinheit 14 dient dazu, die über den Vorwärtskanal lediglich weiterzuleitenden Informationen zu verstärken. Die Verstärkereinheit 14 ist beispielsweise aus einem Leistungsverstärker aufgebaut. Ferner ist eine Sendeeinheit 18 vorgesehen, die über den Vorwärtskanal zu übertragende Signale von der Steuereinheit 17 erhält. Zu diesen Signalen gehören auch die Signale, die Informationen über die empfangene Leistung der von einer benachbarten Sende-/Empfangseinrichtung, z.B. Verstärker 12, über den Rückkanal ausgesendten Signale beinhalten. Die Sendeeinheit 18 führt die nötige Kodierung, Komprimierung, etc. durch.

Die Sende-/Empfangseinrichtung beinhaltet des weiteren zwei Filter 24, 25, die jeweils als Hochpaß/Tiefpaßfilter ausgebildet sind. Die Filter dienen dazu, den Rückkanal in zwei Teilkanäle zu unterteilen. In dem einen Teilkanal werden Informationen übertragen, die lediglich weitergeleitet werden sollen, z.B. Anforderungsignale, Synchronisationssignale etc. In dem anderen Teilkanal werden Signale übertragen, die in der Sende/Empfangseinrichtung einer Verarbeitung, Überprüfung oder dgl. bedürfen. Zu diesen Signalen gehören auch die Signale einer benachbarten Signal/Empfangseinrichtung, z.B. Verstärker 12. Diese Signale beinhalten Informationen über die empfangene Leistung der von der Sende/Empfangseinrichtung, z.B. Verstärker 11, ausgesendten Signale. Die Signale von Verstärker 12 werden der Empfangseinheit 22 zugeführt, die sie zur Steuereinheit 17 weiterleitet. Die Empfangseinheit 22 beinhaltet z.B. eine als Schwellwertdetektor ausgebildete Meßeinheit und übernimmt beispielsweise die Dekodierung, Entzerrung, Dekomprimierung, etc. Zwischen die Filter 22 und 25 ist die Verstärkereinheit 23 mit einstellbarer Verstärkung eingefügt, die von der Steuereinheit 17 gesteuert wird. Die Verstärkereinheit 23 dient dazu, die über den Rückkanal lediglich weiterzuleitenden Informationen zu verstärken. Die Verstärkereinheit 23 ist beispielsweise aus einem Leistungsverstärker aufgebaut. Ferner ist eine Sendeeinheit 21 vorgesehen, die über den Rückkanal zu übertragende Signale von der Steuereinheit 17 erhält. Zu diesen Signalen gehören auch die Signale, die Informationen über die empfangene Leistung der von einer benachbarten Sende-/Empfangseinrichtung, z.B. Verstärker 9, über den Vorwärtskanal ausgesendten Signale beinhalten. Die Sendeeinheit 21 führt die nötige Kodierung, Komprimierung, etc. durch.

Im folgenden wird ein Verfahren zur Beeinflussung der Übertragung von Informationssignalen im interaktiven Kommunikationsnetzwerk aus Fig.1, das die Zentrale 1 beinhaltet, die über den Vorwärtskanal mit mehreren Endstellen 6, 7, 8 verbunden ist, wobei die mehreren Endstellen 6, 7, 8 über den Rückkanal mit der Zentrale 1 verbunden sind. In dem Netzwerk wird derart eine Regelschleife zur Regelung des Ausgangsleistung der im Rückkanal ausgesandten Informationssignale implementiert, daß in einer ersten Sende-/Empfangseinrichtung, z.B. Verstärker 11, die Leistung der über den Rückkanal empfangenen Informationssignale einer zweiten Sende-/Empfangseinrichtung, z.B. Verstärker 12, ermittelt wird und in Abhängigkeit von der ermittelten Leistung der Informationssignale der zweiten Sende-/Empfangseinrichtung, z.B. Verstärker 12, ein Regelsignal über den Vorwärtskanal übertragen wird, um die Ausgangsleistung der Informationssignale zu regeln. Anstelle der Leistung kann auch die Signalamplitude, die Intensität oder der Signalpegel der empfangenen Informationssignale ermittelt und als Regelsignal verwendet werden.

In einer ersten Variante enthält das Regelsignal eine Information über die ermittelte Leistung, im einfachsten Fall den Wert der ermittelten Leistung; für den Fall, daß die Meßeinheit geeignet ist, nicht nur den Bereich, sondern den exakten Wert festzustellen. Dieses Regelsignal wird zur zweiten Sende-/Empfangseinrichtung, z.B. Verstärker 12 übertragen. Im Verstärker 12 erfolgt die Auswertung der ermittelten Leistung, z.B. durch Vergleich mit einer unteren und einer oberen Schwelle. Abhängig vom Ergebnis des Vergleichs erfolgt die Einstellung der Verstärkung der einstellbaren Verstärkereinheit 23. Die Verstärkereinheit 23 dient dazu, Informationssignale zu verstärken, die über den Rückkanal des interaktiven Netzwerkes ausgesandt werden, wie weiter oben erläutert.

In einer zweiten Variante erfolgt die Auswertung der ermittelten Leistung in der ersten Sende-/Empfangseinrichtung, z.B. Verstärker 11. Das Regelsignal stellt dann bereits ein Stellsignal für den Verstärker 23 mit einstellbarer Verstärkung bereit, das ohne weitere Verarbeitung über die Steuereinheit 17 dem Verstärker 23 zugeführt wird, so daß auf diese Weise eine telemetrische Verstärkungseinstellung erfolgt.

In einer dritten Variante wird die ermittelte Leistung zunächst über den Rückkanal zur Zentrale 1 übertragen. In der Zentrale 1 erfolgt die Auswertung der ermittelten Leistung sowie die Generierung und Übertragung des Regelsignals. Das Regelsignal stellt ein Stellsignal für den Verstärker 23 mit einstellbarer Verstärkung bereit.

In der ersten und zweiten Variante kann die Zentrale 1 zusätzlich über aktuelle Übertragungen von Regelsignalen informiert werden, um einen Überblick über die aktuelle Lage im Netz zu erhalten. In der zweiten und dritten Variante brauchen Regelsignale nur übertragen zu werden wenn die empfangenen Signale außerhalb des vorgegebenen Bereichs liegen. In der ersten Variante ist durch die fortlaufende Übertragung gewährleistet, daß die Regelung auch eingeschaltet ist. Die zweite Variante stellt eine dezentrale Überwachung und Steuerung dar, die dritte Variante eine zentrale. Die Reaktionszeit ist in der ersten und zweiten Variante kürzer und damit die Regelung schneller als in der dritten Variante. Zusätzlich zu den Regelsignalen können in allen drei Varianten auch Maintenance Informationen zu den benachbarten Sende-/Empfangseinrichtungen übertragen werden.

Die Geschwindigkeit mit der Regelmechanismus auf Leistungsschwankungen reagiert ist optional einstellbar. Dies erfolgt beispielsweise über ein Zeitschaltglied oder Totzeitglied, das erst anspricht, wenn die ermittelte Leistung eine vorgegebene Zeit lang außerhalb des vorgegebenen Bereichs liegt. Dies hat den Vorteil, daß bei kurzzeitigen, z.B. pulsförmigen Über- oder Unterschreitungen der vorgegebenen Werte keine unnötige Regelung iniziiert wird.

Anstelle der oder zusätzlich zur Regelschleife zur Regelung der Ausgangsleistung der im Rückkanal ausgesandten Informationssignale kann eine Regelschleife zur Regelung der Ausgangsleistung der im Vorwärtskanal ausgesandten Informationssignale implementiert sein. Dazu wird in der zweiten Sende-/Empfangseinrichtung, z.B. Verstärker 11, die Leistung der über den Vorwärtskanal empfangenen Informationssignale der ersten Sende-/Empfangseinrichtung, z.B. Verstärker 9, ermittelt und in Abhängigkeit von der ermittelten Leistung der Informationssignale der ersten Sende-/Empfangseinrichtung, z.B. Verstärker 9, ein Regelsignal über den Rückkanal übertragen wird, um die Ausgangsleistung der Informationssignale zu regeln. Dazu sind die Empfangseinheit 16, die Steuereinheit 17 und die Sendeeinheit 21 vorgesehen.

Anstelle der Leistung des Informationssignals im Rückkanal kann auch die Leistung eines Testsignals ermittelt wird, das frequenzmäßig gesehen nur einen Teilbereich des Rückkanals belegt. Ebenso kann anstelle der Gesamtleistung des Informationssignals im Rückkanal auch nur ein Teil des Informationssignals in einem Teilbereich der Rückkanals ermittelt und als Referenz für das Regelsignal herangezogen werden.

Fig. 3 zeigt eine weitere erfindungsgemäße Sende-/Empfangseinrichtung. Die Sende-/Empfangseinrichtung beinhaltet ein Filter 19, eine Empfangseinheit 16 und eine Sendeeinheit 21, die in ihrem Aufbau und ihrer Funktion im wesentlichen den gleichnamigen Bauelementen aus Fig. 2 entsprechen.

Die Sende-/Empfangseinrichtung wird an jedem Leitungsende des Koaxialnetzes installiert, d.h. an jedem Strangende. Sie wird damit hinter dem letzten Verstärker 10, 12 und hinter der letzten angeschlossenen Endstelle 6, 7, 8 installiert. Sie dient dazu, die über den Vorwärtskanal empfangenen Signale zu detektieren. Die Detektion beinhaltet beispielsweise eine Messung, z.B. die Messung der Signalqualität, die Signalamplitude, etc. Die gemessenen Werte werden über die Sendeeinrichtung und den Rückkanal zum letzten Verstärker 10, 12 und/oder zur Zentrale 1 übertragen. Durch die Verwendung eines Schwellwertdetektors mit einer unteren und einer oberen Grenze kann festgestellt werden, ob die empfangene Signalamplitude zu gering oder zu hoch ist. Ist sie zu hoch kann die Verstärkung im letzten Verstärker 10, 12 reduziert werden. Dies spart Energie und trägt zur Langlebigkeit der Empfangseinheiten der Endstellen 6, 7, 8 bei. Ist die empfangene Signalamplitude zu gering, wird die Verstärkung im letzten Verstärker 10, 12 erhöht, um den Empfang in den Endstellen 6, 7, 8 zu verbessern.

Die Sende-/Empfangseinrichtung, die als Abschluß des Koaxialnetzes dient, kann auch gleichzeitig zur Potentialtrennung genutzt werden, um die durch eventuelle Störungen, z.B. hervorgerufen durch Reflexionen an einem offenen Ende des Koaxialnetzes, im Rückkanal hervorgerufenen Empfangsbeeinträchtigungen in den letzten Verstärkern 10, 12 zu reduzieren. Sendeeinheit 21 sendet ein Signal, das an die Verhältnisse im Rückkanal angepaßt ist, z.B. gleiches Protokoll, geeignete Frequenz, vorgegebener Übertragungskanal/Zeitschlitz, etc. Das Signal wird über den Rückkanal ausgesandt. Das Signal beinhaltet beispielsweise Informationen über die detektierten Signale, z.B. Wert der Signalamplitude, empfangenes Signal oberhalb, unterhalb oder innerhalb des vorgegebenen Wertebereichs, Signal-zu-Rauschverhältnis, etc.

Die Sende-/Empfangseinrichtung bildet somit die letzte angeschlossene Endstelle, an die allerdings kein Teilnehmer angeschlossen ist. Bei einer Erweiterung des Netzes muß sie daher wieder entfernt und an das neue Ende angeschlossen werden. Für jedes koaxiale Teilnetz, also die Verbindung vom letzten Verstärker 10, 12 zu den an diesen Verstärker 10, 12 angeschlossenen Endstellen 6, 7, 8 wird nur eine Sende/Empfangseinrichtung benötigt. Auf diese Art und Weise wird erreicht, daß nicht jede Endstelle 6, 7, 8 eine eigene Überprüfung der Signalqualität oder der Signalamplitude, etc. durchführen muß. Es wird nur eine Sende/Empfangseinrichtung am Ende des Koaxialnetzes benötigt. Ist die Signalqualität am Ende des Koaxialnetzes noch ausreichend gut, d.h. innerhalb eines vorgegebenen Bereichs, so ist sie es auch für die der Sende-/Empfangseinrichtung vorgelagerten Endstellen 6, 7, 8.

## Patentansprüche

1. Sende-/Empfangseinrichtung eines interaktiven Kommunikationsnetzwerkes, das eine Zentrale (1) beinhaltet, die über einen Vorwärtskanal mit mehreren Endstellen (6, 7, 8) verbunden ist, wobei die mehreren Endstellen (6, 7, 8) über einen Rückkanal mit der Zentrale (1) verbunden sind,
**dadurch gekennzeichnet,**
daß eine Verstärkereinheit (23) vorgesehen ist, die eine einstellbare Verstärkung hat und geeignet ist, Informationssignale zu verstärken, die über den Rückkanal des interaktiven Netzwerkes ausgesandt werden sollen, daß eine Empfangseinheit (16) vorgesehen ist, um Signale einer weiteren Sende-/Empfangseinrichtung über den Vorwärtskanal des interaktiven Netzwerkes zu empfangen, und daß eine Steuereinheit (17) vorgesehen ist, die mit der Empfangseinheit (16) und der Verstärkereinheit (23) verbunden ist und geeignet ist, die Verstärkung der Verstärkereinheit (23) in Abhängigkeit von den über den Vorwärtskanal empfangenen Signalen einzustellen.

2. Sende-/Empfangseinrichtung eines interaktiven Kommunikationsnetzwerkes, das eine Zentrale (1) beinhaltet, die über einen Vorwärtskanal mit mehreren Endstellen (6, 7, 8) verbunden ist, wobei die mehreren Endstellen (6, 7, 8) über einen Rückkanal mit der Zentrale (1) verbunden sind,
**dadurch gekennzeichnet,**
daß eine Verstärkereinheit (14) vorgesehen ist, die eine einstellbare Verstärkung hat und geeignet ist, Informationssignale zu verstärken, die über den Vorwärtskanal des interaktiven Netzwerkes ausgesandt werden sollen, daß eine Empfangseinheit (22) vorgesehen ist, um Signale einer weiteren Sende-/Empfangseinrichtung über den Rückkanal des interaktiven Netzwerkes zu empfangen, und daß eine Steuereinheit (17) vorgesehen ist, die mit der Empfangseinheit (22) und der Verstärkereinheit (14) verbunden ist und geeignet ist, die Verstärkung der Verstärkereinheit (14) in Abhängigkeit von den über den Rückkanal empfangenen Signalen einzustellen.

3. Verfahren zur Beeinflussung der Übertragung von Informationssignalen in einem interaktiven Kommunikationsnetzwerk, das eine Zentrale (1) beinhaltet, die über einen Vorwärtskanal mit mehreren Endstellen (6, 7, 8) verbunden ist, wobei die mehreren Endstellen (6, 7, 8) über einen Rückkanal mit der Zentrale (1) verbunden sind,
**dadurch gekennzeichnet,**
daß in dem Netzwerk derart eine Regelschleife zur Regelung des Ausgangsleistung der im Rückkanal ausgesandten Informationssignale implementiert ist, daß in einer ersten Sende-/Empfangseinrichtung die Leistung der über den Rückkanal empfangenen Informationssignale einer zweiten Sende-/Empfangseinrichtung ermittelt wird und in Abhängigkeit von der ermittelten Leistung der Informationssignale der zweiten Sende/Empfangseinrichtung ein Regelsignal über den Vorwärtskanal übertragen wird, um die Ausgangsleistung der Informationssignale zu regeln.

4. Verfahren nach Anspruch 3, dadurch gekennzeichnet, daß anstelle der Leistung die Signalamplitude, die Intensität oder der Signalpegel der empfangenen Informationssignale ermittelt wird.

5. Verfahren nach Anspruch 3, dadurch gekennzeichnet, daß das Regelsignal eine Information über die ermittelte Leistung enthält, und daß in der zweiten Sende-/Empfangseinrichtung die Auswertung der ermittelten Leistung und abhängig davon die Einstellung der Verstärkung eines einstellbaren Verstärkers (23) erfolgt, der dazu dient Informationssignale zu verstärken, die über den Rückkanal des interaktiven Netzwerkes ausgesandt werden.

6. Verfahren nach Anspruch 3, dadurch gekennzeichnet, daß die Auswertung der ermittelten Leistung in der ersten Sende/Empfangseinrichtung erfolgt, und daß Regelsignal ein Stellsignal für einen Verstärker (23) mit einstellbarer Verstärkung bereitstellt, der in der zweiten Sende-/Empfangseinrichtung vorhanden ist und dazu dient Informationssignale zu verstärken, die über den Rückkanal des interaktiven Netzwerkes ausgesandt werden.

7. Verfahren nach Anspruch 3, dadurch gekennzeichnet, daß die ermittelte Leistung über den Rückkanal zur Zentrale (1) übertragen wird und in der Zentrale (1) die Auswertung der ermittelten Leistung erfolgt, und daß die Zentrale das Regelsignal generiert und überträgt, das ein Stellsignal für eine Verstärkereinheit (23) mit einstellbarer Verstärkung bereitstellt, der in der zweiten Sende-/Empfangseinrichtung vorhanden ist und dazu dient Informationssignale zu verstärken, die über den Rückkanal des interaktiven Netzwerkes ausgesandt werden.

8. Verfahren nach Anspruch 3, dadurch gekennzeichnet, daß anstelle der oder zusätzlich zur Ermittlung der Leistung durch Vergleich mit mindestens einem Schwellwert eine Überprüfung dahingehend erfolgt, ob die Leistung in einem vorgegebenen Bereich liegt.

9. Verfahren nach Anspruch 3, dadurch gekennzeichnet, daß die Geschwindigkeit mit der Regelmechanismus auf Leistungsschwankungen reagiert einstellbar ist.

10. Verfahren nach Anspruch 3, dadurch gekennzeichnet, daß anstelle der oder zusätzlich zur Regelschleife zur Regelung der Ausgangsleistung der im Rückkanal ausgesandten Informationssignale eine Regelschleife zur Regelung der Ausgangsleistung der im Vorwärtskanal ausgesandten Informationssignale implementiert ist, daß in der zweiten Sende/Empfangseinrichtung die Leistung der über den Vorwärtskanal empfangenen Informationssignale der ersten Sende/Empfangseinrichtung ermittelt wird und in Abhängigkeit von der ermittelten Leistung der Informationssignale der ersten Sende/Empfangseinrichtung ein Regelsignal über den Rückkanal übertragen wird, um die Ausgangsleistung der Informationssignale zu regeln.

11. Verfahren nach Anspruch 3, dadurch gekennzeichnet, daß anstelle der Leistung des Informationssignals im Rückkanal die Leistung eines Testsignals ermittelt wird, das frequenzmäßig gesehen nur einen Teilbereich des Rückkanals belegt.

12. Sende-/Empfangseinrichtung nach Anspruch 1 oder 2, dadurch gekennzeichnet, daß sie Teil eines bidirektionalen Verstärkers (9, 10, 11, 12), Teil der Zentrale (1) oder Teil einer Netzabschlußeinheit (3, 4, 5) ist.

13. Sende-/Empfangseinrichtung nach Anspruch 1 oder 2, dadurch gekennzeichnet, daß anstelle der Verstärkereinheit (23) ein Dämpfungsglied vorgesehen ist, das eine einstellbare Dämpfung hat und geeignet ist, Informationssignale zu dämpfen, die über das interaktive Netzwerk ausgesandt werden sollen.

14. Sende-/Empfangseinrichtung eines interaktiven Kommunikationsnetzwerkes, das eine Zentrale (1) beinhaltet, die über einen Vorwärtskanal mit mehreren Endstellen (6, 7, 8) verbunden ist, wobei die mehreren Endstellen (6, 7, 8) über einen Rückkanal mit der Zentrale (1) verbunden sind,
**dadurch gekennzeichnet,**
daß die Sende-/Empfangseinrichtung als Abschluß des interaktiven Kommunikationsnetzwerkes dient, daß sie eine Empfangseinheit (16) beinhaltet, die geeignet ist, über den Vorwärtskanal des interaktiven Netzwerkes ausgesandte Signale zu detektieren, und daß eine Sendeeinheit (21) vorgesehen ist, um Informationen über die detektierten Signale über den Rückkanal zu übertragen.
